# EUROPEAN PATENT SPECIFICATION

(11) **EP 2 389 533 B1**
(45) Date of publication and mention of the grant of the patent: **28.11.2012**
(21) Application number: 09787632.0
(22) Date of filing: 26.01.2009
(51) Int. Cl.: F17C 13/04, F16K 1/30

(54) **A VALVE UNIT FOR PRESSURE VESSELS**
VENTILEINHEIT FÜR DRUCKGEFÄSSE
UNITÉ DE SOUPAPE POUR RÉCIPIENTS SOUS PRESSION

(43) Date of publication of application: 30.11.2011
(73) Proprietor: Cavagna Group S.p.a., 25011 Ponte San Marco - Calcinato (IT)
(72) Inventor: CAVAGNA, Carlo, I-25010 Calcinatello Di Calcinato (BS) (IT)
(74) Representative: Locas, Davide
(86) International application number: PCT/IT2009/000019
(87) International publication number: WO 2010/084518

(56) References cited:
- EP-A1- 1 617 188
- EP-A1- 1 855 048
- EP-A2- 0 114 010
- EP-A2- 0 167 409
- FR-A1- 2 462 295
- FR-A1- 2 685 428
- US-A- 3 177 715
- US-A- 3 256 907

## Description

### Technical field

The present invention relates to a valve unit for pressure vessels, in particular vessels containing compressed liquefied gases, which are also commonly known as "bottles".

The present invention is particularly, but not exclusively, adapted for use on tanks for compressed liquefied gas to be used as fuel for vehicles.

### Technological background

These vessels are generally provided with:
- a shutter for opening and closing the bottle B, respectively enabling and preventing the passage of the compressed liquefied gas,
- a safety valve device protecting the bottle from any abnormal pressure increases,
- a flow excess valve adapted to stop the supply of gas if the supply tube from the bottle is accidentally broken or the supply flow increases in an uncontrolled manner,
- a level indicator adapted to show that the maximum level has been reached when the tank is being filled.

The devices described above all have to be connected to the single opening provided at the top of the bottle. Examples of such devices are described in US 3,256,907, EP 1 617 188, or US 3,177,715, US 3256907 being considered as closest prior art, upon which the preamble to claim 1 is based.

The installation of these devices on the bottle thus entails a number of drawbacks connected chiefly with their bulk and the need to prevent losses at the respective connection attachments between the device and the bottle opening.

### Description of the invention

The main object of the invention is thus to provide a valve unit for compressed gas vessels, in particular for compressed liquefied gases, which is structurally and functionally designed to remedy the drawbacks described with respect to the cited prior art.

These and other objects to be described below are achieved by the invention by means of a valve unit according to the appended claims.

### Brief description of the drawings

The features and advantages of the invention will become clear from the following detailed description of a preferred embodiment thereof, which is given with reference to the appended drawings which are provided purely by way of non-limiting example, and in which:

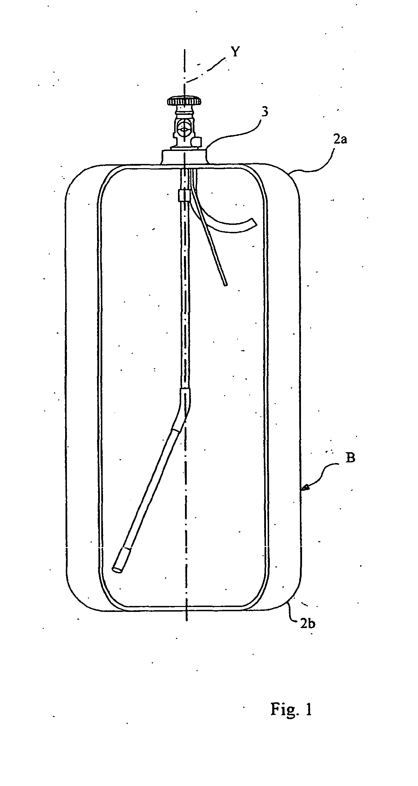

Fig. 1 is a lateral view of a sketch of a bottle on which a valve unit of the present invention is installed;

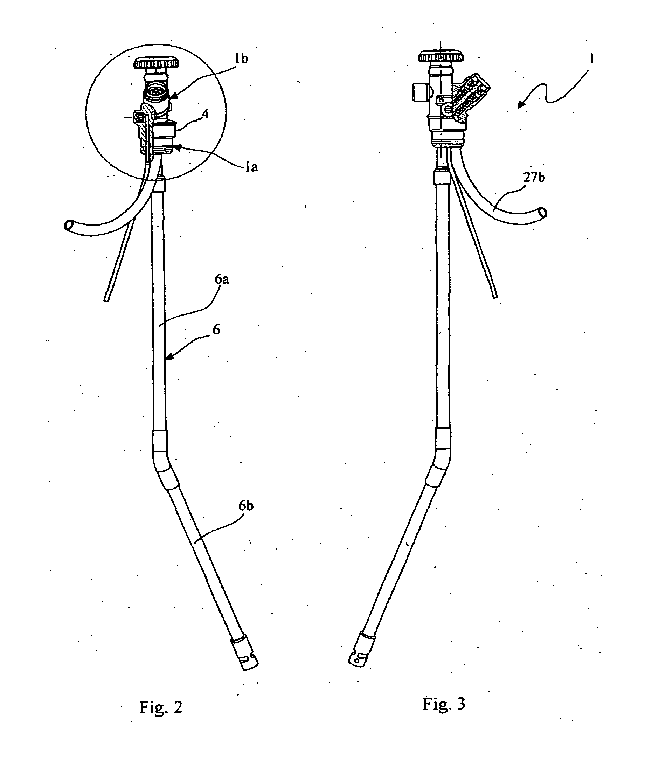

Figs. 2 and 3 are respective lateral views of the valve unit of Fig. 1;
Fig. 4 is a lateral view of a detail of the valve unit of Fig. 1;
Fig. 5 is a front sectional view of the detail of Fig. 4;

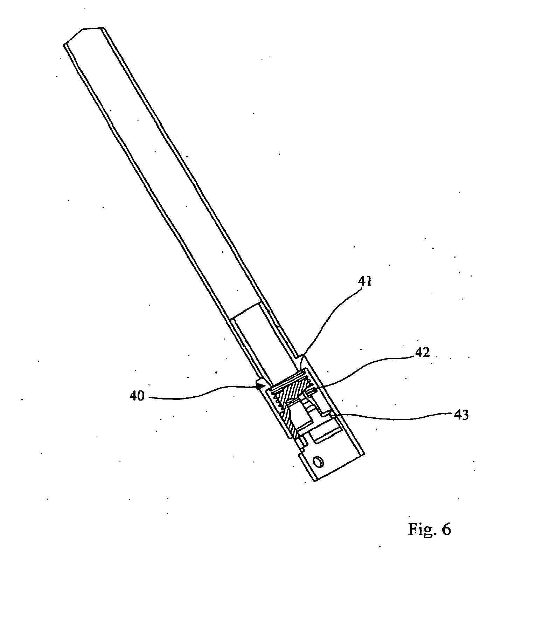

Fig. 6 is a lateral sectional view of a second detail of the valve unit of Fig. 1.

### Preferred embodiment of the invention

In the drawings, a valve unit adapted to be applied to a vessel (bottle B) for compressed liquefied gas is shown overall by 1. The bottle B is of conventional type and is cylindrical with a longitudinal axis Y and has two opposite, respectively upper and lower, curved surfaces 2a, b.

At the upper curved surface 2a, the bottle B comprises a threaded opening 3 which may be coupled with a threaded spigot 4 provided on the valve body 1.

The spigot 4 divides the valve unit 1 into two, respectively inner and outer, portions 1a, b. When the spigot 4 is coupled to the opening 3, the portions 1a, b are disposed inside and outside the bottle B respectively. The inner portion 1a comprises a tubular appendix 6 extending from one to the other of the curved surfaces 2a, b, within which the gas being supplied to and from the bottle B flows.

The outer portion 1b comprises a supply/filling mouth 5 for the bottle B, disposed at right angles to the axis Y. The valve body 1 comprises a first duct 7, parallel to the axis Y, adapted to connect the mouth 5 with the appendix 6. The first duct 7 comprises a portion 7a at the location of the spigot 4.

A first shutter 8 which may move in a cylindrical seat 9 provided in the portion 1b of the valve body 1 is disposed between the mouth 5 and the first duct 7. The shutter 8 may be moved away from and towards an end portion 7b of the first duct 7 in order respectively to open and close the first duct 7. When the first shutter 8 encounters the portion 7b, the first duct 7 is closed and the flow of gas to and from the inside of the bottle B is discontinued; when the shutter 8 is remote from the portion 7b, the first duct 7 is open and the interior of the bottle B is communicates with the mouth 5. The shutter is provided with two annular seats 10a, b, in which two annular rubber gaskets 11a, b, are respectively housed and are adapted to prevent the gas from leaking between the shutter 8 and the cylindrical seat 9.

The shutter 8 is actuated by means of a manual wheel control 12, integral therewith, provided at the end of the outer portion 1b of the valve body 1. The wheel 12 comprises a threaded portion 13 coupled to a threaded seat 14 provided in the threaded body 1 such that the wheel 12 may be screwed into and unscrewed from the seat 14 in order respectively to close the shutter 8 towards or distance it from the first duct 7.

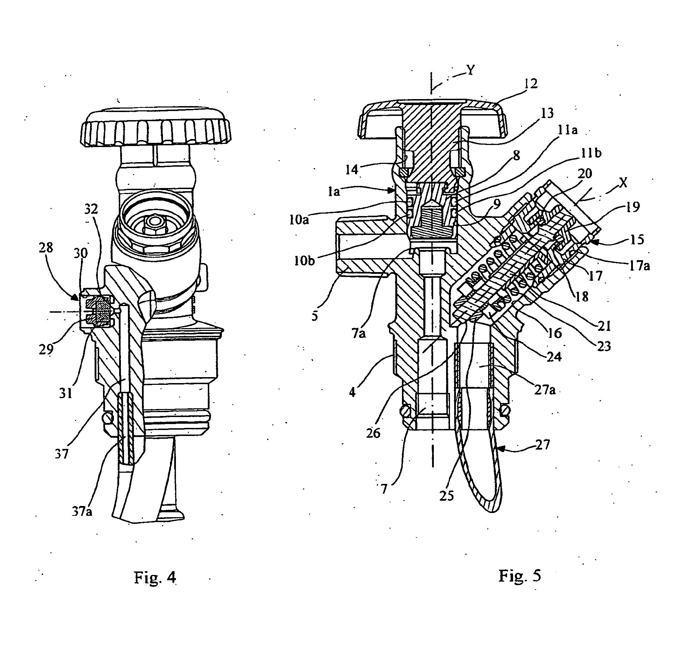

The portion 1b of the valve body 1 further comprises a safety valve device 15. With reference to the lateral view of Fig. 5, the valve device 15 is disposed, with respect to the axis Y, on the opposite side with respect to the mouth 5 and is housed in a first, substantially cylindrical, cavity 16 of axis X inclined with respect to the axis Y. The cavity 16 is connected to the interior of the bottle B by a second duct 27 comprising a first portion 27a which passes through the spigot 4 parallel to the first duct 7 and a second portion 27b formed by an arcuate tube. The second portion 27b of the second duct 27 is fully housed within the bottle B when the spigot 4 is coupled to the opening 3.

The valve device 15 comprises a hollow ring nut 17 screwed rigidly into a threaded seat 17a of the first cavity 16. The ring nut 17 is provided with a first valve seat 18. The valve device 15 further comprises a second piston shutter 19 provided with a first sealing member 20 which contacts the valve seat 18. The piston 19 comprises a rod 21 disposed along the axis X. The cavity 16 houses resilient means 23 comprising a helical spring acting between the ring nut 17 and a spring press member .24 which bears on a nut 25 screwed onto a threaded portion 26, disposed at the free end of the rod 21, which is longitudinally opposite with respect to the second valve seat 18.

By means of the nut 25 it is possible to regulate the preloading of the spring 23 and therefore the intervention pressure of the safety device 15. If the pressure in the tank increases above the intervention pressure, the force exerted on the piston 19 is greater than the preloading of the spring 23 and causes the sealing member 20 to move away from the seat 18 so that the gas may leak through the seat 18 and be discharged from the bottle B until the internal pressure is lower than the intervention pressure.

The valve unit 1 comprises a level indicator 28 including a third shutter 29, screwed into a second cylindrical cavity 30 at right angles to the axis Y, provided in the outer portion 1b of the valve body 1. The cylindrical cavity 30 is disposed so that it is at right angles to the plane of the section shown in Fig. 5.

The shutter 29 comprises a second sealing member 31 which contacts a second valve seat 32 which may be connected to the interior of the bottle B by means of a third duct 37, parallel to the axis Y, the first duct 7 and to the second duct 27, comprising a capillary portion 37a at the location of the spigot 4.

When the bottle B is being filled, the operator unscrews the shutter 29, moving the sealing member 31 away from the valve seat 32 so that the interior of the bottle B is brought into communication with the outside via the capillary portion 37a. When the level of fluid in the bottle reaches a predetermined level (typically 80% of the maximum internal volume of the bottle B), the fluid rises in the duct 37 as a result of the pressure difference between the inside and the outside of the bottle, and escapes into the external atmosphere via an orifice (not shown) on the valve body 1, thereby showing the operator that the filling level has been reached.

During normal operation, the shutter 29 has to be screwed in so that the sealing member 31 is in contact with the valve seat 32, thereby preventing accidental leakages of gas.

The appendix 6 comprises two consecutive rectilinear portions 6a, b, the portion 6a being closer to the spigot 4 than the portion 6b. The portions 6a, b, are respectively parallel to the axis Y and inclined with respect to the axis Y so that the free end of the portion 6b is close to the perimeter of the lower curved surface 2b.

A flow excess valve 40 is coupled to the free end of the portion 6b of the appendix 6. The valve 40 is of the type with a piston which is normally open. The valve 40 comprises a third valve seat 41 and a third piston shutter 43 on which a resilient recall member formed by a spring 42 acts. The shutter 43 is normally kept remote from the valve seat 41 by means of the spring 42.

If a supply tube (not shown) connected to the mouth 5 accidentally breaks or if the supply flow from the bottle B increases in an uncontrolled manner, the force exerted by the fluid being discharged is greater than the force which may be exerted by the spring 42 and as a result the shutter 43 is urged against the valve seat 41 closing off the outgoing flow of gas.

The present invention makes it possible to provide a valve body 1 in which the shutter 8 for opening/closing the bottle B, the, level indicator 28, the safety valve device 15 and the flow excess valve 40 are integrated. The solution proposed is particularly compact and simple to install.

A single threaded connection is provided between the valve body 1 and the bottle B in order to minimise the risk of any leaks.

The invention therefore achieves the stated object and at the same time provides many advantages. These include the use of a safety valve device 15 which uses an inner spring, always in contact with the gas. Moreover, when necessary, it is possible to replace the safety valve device simply by unscrewing it from its seat, without removing the valve body 1 from the bottle B.

## Claims

1. A valve body (1) which may be connected to a pressure vessel (B), in particular a vessel (B) adapted to contain a liquefied gas, with a spigot (4) which may be coupled on a respective opening of the vessel (B) and **characterized in that** it comprises three individual ducts (7, 27, 37), with
- a first duct (7) which may be used to fill and empty the vessel (B),
- a second duct (27) connecting the vessel (B) to a safety valve device (15) provided on the valve body (1), and
- a third duct (37) connecting the vessel (B) to a level indicator (28) provided on the valve body (1),
the first, second and third ducts (7, 27, 37) comprising three respective portions (7a, 27a, 37a) which are parallel to each another and disposed at the location of the spigot (4) and said portions extending into three further respective portions (6a,b, 37b) which are fully housed within the vessel (B) when the spigot (4) is coupled on the opening (3).

2. A valve body (1) according to one of the preceding claims, wherein a first shutter (8) may move in a seat (9) of the valve body (1) away from and towards said further portion (7b) of the first duct (7) in order respectively to open and close this first duct (7).

3. A valve body (1) according to one of the preceding claims, wherein a flow excess valve (40) is provided at the end of the first duct (7).

4. A valve body (1) according to claim 5, wherein the flow excess valve (40) is of the type with a piston (43) which is normally open, a resilient recall member (42) acting on this piston (43).

5. A valve body (1) according to one of the preceding claims, wherein the safety valve device (15) comprises:
- a first cavity (16) in which a first valve seat (18) is formed,
- a second piston shutter (19) which may move along a longitudinal sliding axis (X) to and from the first valve seat (18),
- resilient means (23) housed in the first cavity (16) and acting on the second piston shutter (19) in order to urge this second piston 6 shutter (19) against the first valve seat (18).

6. A valve body (1) according to claim 5, wherein the second piston shutter (19) comprises a rod (21) extending longitudinally along the sliding axis (X) and the resilient means (23) comprise a helical spring disposed coaxially with respect to this sliding axis (X).

7. A valve body (1) according to one of the preceding claims, wherein the first duct (7) comprises two consecutive rectilinear portions (6a, 6b) inclined with respect to one another which may be fully housed in the vessel (B).

8. A valve body (1) according to one of the preceding claims, wherein the level indicator comprises a third shutter (29) moving in a second cavity (30) away from and towards a second valve seat (32), the third shutter (29) and the second cavity (30) being connected together by a threaded coupling.

9. A valve body (1) according to one of the preceding claims, wherein said further portion (37a) of the third duct (37) is a capillary portion.

## Patentansprüche

1. Ventilkörper (1), der mit einem Druckgefäß (B), insbesondere einem Druckgefäß (B), das zur Aufnahme von verflüssigtem Gas mit einem Zapfhahn (4) eingerichtet ist, der an einer jeweiligen Öffnung des Druckgefäßes (B) ankoppelbar ist, verbindbar ist, und **dadurch gekennzeichnet ist, dass** dieser drei einzelne Leitungskanäle (7, 27, 37) umfasst, mit
- einem ersten Leitungskanal (7), der zum Befüllen und Entleeren des Druckgefäßes (B) verwendbar ist,
- einem zweiten Leitungskanal (27), der das Druckgefäß (B) mit einer Sicherheitsventilvorrichtung (15) verbindet, die am Ventilkörper (1) vorgesehen ist, und
- einem dritten Leitungskanal (37), der das Druckgefäß (B) mit einem Füllstandsanzeiger (28) verbindet, der am Ventilkörper (1) vorgesehen ist,
wobei die ersten, zweiten und dritten Leitungskanäle (7, 27, 37) drei jeweilige Bereiche (7a, 27a, 37a) umfassen, die parallel zueinander sind und an der Position des Zapfhahns (4) angeordnet sind, und die Bereiche sich in drei weitere jeweilige Bereiche (6a,b, 37) erstrecken, die vollständig im Druckgefäß (B) untergebracht sind, wenn der Zapfhahn (4) an der Öffnung (3) angekoppelt ist.

2. Ventilkörper (1) nach einem der vorhergehenden Ansprüche, wobei ein erster Verschluss (8) sich in einem Sitz (9) des Ventilkörpers (1) weg vom und zum weiteren Bereich (7b) des ersten Leitungskanals (7) hin bewegen kann, um diesen ersten Leitungskanal (7) entsprechend zu öffnen und zu schließen.

3. Ventilkörper (1) nach einem der vorhergehenden Ansprüche, wobei ein Überlaufenventil (40) am Ende des ersten Leitungskanals (7) vorgesehen ist.

4. Ventilkörper (1) nach Anspruch 3, wobei das Überlaufventil (40) ein Typ mit einem Kolben (43) ist, das normal offen ist, wobei ein elastisches Rückführelement (42) auf diesen Kolben (43) einwirkt.

5. Ventilkörper (1) nach einem der vorhergehenden Ansprüche, wobei die Sicherheitsventilvorrichtung (15) umfasst:
- einen ersten Hohlraum (16), in welchem ein erster Ventilsitz (18) ausgebildet ist,
- einen zweiten Kolbenverschluss (19), der sich entlang einer längsgerichteten Gleitachse (X) hin zum und vom ersten Ventilsitz (18) weg bewegen kann,
- eine elastische Einrichtung (23), die im ersten Hohlraum (16) untergebracht ist und auf den zweiten Kolbenverschluss (19) einwirkt, um diesen zweiten Kolbenverschluss (19) gegen den ersten Ventilsitz (18) zu drücken.

6. Ventilkörper (1) nach Anspruch 5, wobei der zweite Kolbenverschluss (19) eine Stange (21) aufweist, die sich in Längsrichtung entlang der Gleitachse (X) erstreckt, und die elastische Einrichtung (23) eine schraubenförmige Feder aufweist, die in Bezug auf diese Gleitachse (X) koaxial angeordnet ist.

7. Ventilkörper (1) nach einem der vorhergehenden Ansprüche, wobei der erste Leitungskanal (7) zwei aufeinanderfolgende geradlinige, in Bezug zueinander geneigte Bereiche (6a, 6b) umfasst, die vollständig im Druckgefäß (B) untergebracht sein können.

8. Ventilkörper (1) nach einem der vorhergehenden Ansprüche, wobei der Füllstandsanzeiger einen dritten Kolbenverschluss (29) aufweist, der sich in einem zweiten Hohlraum (30) weg vom und zum zweiten Ventilsitz (32) hin bewegt, wobei der dritte Kolbenverschluss (29) und der zweite Hohlraum (30) durch eine Gewindekupplung miteinander verbunden sind.

9. Ventilkörper (1) nach einem der vorhergehenden Ansprüche, wobei der weitere Bereich (37a) des dritten Leitungskanals (37) ein Kapillarbereich ist.

## Revendications

1. Corps de soupape (1) qui peut être relié à une cuve (B) sous pression, en particulier une cuve (B) conçue pour contenir un gaz liquéfié, avec un bout mâle (4) qui peut être accouplé sur une ouverture respective de la cuve (B) et **caractérisé en ce qu'**il comprend trois conduits (7, 27, 37) individuels, avec
- un premier conduit (7) qui peut être utilisé pour remplir et vider la cuve (B),
- un deuxième conduit (27) reliant la cuve (B) à un dispositif de soupape de sûreté (15) prévu sur le corps de soupape (1), et
- un troisième conduit (37) reliant la cuve (B) à un indicateur de niveau (28) prévu sur le corps de soupape (1),
les premier, deuxième et troisième conduits (7, 27, 37) comprenant trois parties (7a, 27a, 37a) respectives qui sont parallèles les unes aux autres et disposées à l'emplacement du bout mâle (4) et lesdites parties s'étendant dans trois autres parties (6a, b, 37b) respectives qui sont entièrement logées dans la cuve (B) lorsque le bout mâle (4) est accouplé sur l' ouverture (3).

2. Corps de soupape (1) selon la revendication précédente, dans lequel un premier obturateur (8) peut se déplacer dans un siège (9) du corps de soupape (1) à distance de et vers ladite autre partie (7b) du premier conduit (7) afin, respectivement, d'ouvrir et de fermer ce premier conduit (7).

3. Corps de soupape (1) selon l'une des revendications précédentes, dans lequel une soupape d'écoulement excédentaire (40) est prévue à l'extrémité du premier conduit (7).

4. Corps de soupape (1) selon la revendication 5, dans lequel la soupape d'écoulement excédentaire (40) est du type avec un piston (43) qui est normalement ouvert, un élément de rappel élastique (42) agissant sur ce piston (43).

5. Corps de soupape (1) selon l'une des revendications précédentes, dans lequel le dispositif de soupape de sûreté (15) comprend :
- une première cavité (16) dans laquelle un premier siège de soupape (18) est formé,
- un deuxième obturateur à piston (19) qui peut se déplacer le long d'un axe de coulissement longitudinal (X) vers et à partir du premier siège de soupape (18),
- des moyens élastiques (23) logés dans la première cavité (16) et agissant sur le deuxième obturateur à piston (19) afin de pousser ce deuxième obturateur à piston (19) contre le premier siège de soupape (18).

6. Corps de soupape (1) selon la revendication 5, dans lequel le deuxième obturateur à piston (19) comprend une tige (21) s'étendant longitudinalement le long de l'axe de coulissement (X) et les moyens élastiques (23) comprennent un ressort hélicoïdal disposé coaxialement par rapport à cet axe de coulissement (X).

7. Corps de soupape (1) selon l'une des revendications précédentes, dans lequel le premier conduit (7) comprend deux parties rectilignes (6a, 6b) consécutives inclinées l'une par rapport à l'autre qui peuvent être entièrement logées dans la cuve (B).

8. Corps de soupape (1) selon l'une des revendications précédentes, dans lequel l'indicateur de niveau comprend un troisième obturateur (29) se déplaçant dans une deuxième cavité (30) à distance de et vers un deuxième siège de soupape (32), le troisième obturateur (29) et la deuxième cavité (30) étant reliés l'un à l'autre par un raccord à vis.

9. Corps de soupape (1) selon l'une des revendications précédentes, dans lequel ladite autre partie (37a) du troisième conduit (37) est une partie capillaire.
